# EUROPÄISCHE PATENTANMELDUNG

(11) **EP 4 622 065 A1**
(43) Veröffentlichungstag der Anmeldung: **24.09.2025**
(21) Anmeldenummer: 24164497.0
(22) Anmeldetag: 19.03.2024
(51) Int. Cl.: H02K 1/276, H02K 15/03, H02K 15/12, H02K 9/06

(54) **VERFAHREN ZUR HERSTELLUNG EINES ROTORS EINER PERMANENTERREGTEN DYNAMOELEKTRISCHEN MASCHINE MITTELS EINGEKRALLTER VERTEILSCHEIBE**

(71) Anmelder: Innomotics GmbH, 90441 Nürnberg (DE)
(72) Erfinder: Büttner, Klaus, 97618 Hollstadt (DE); Katzenberger, Tobias, 97631 Bad Königshofen STT Untereßfeld (DE); Kirchner, Klaus, 97645 Ostheim (DE); Warmuth, Matthias, 97618 Windshausen (DE)
(74) Vertreter: Siemens Patent Attorneys

(57) **Zusammenfassung**

Die Erfindung betrifft ein Verfahren zur Herstellung eines Rotors (5) mit vergrabenen Permanentmagneten (9), insbesondere einer permanenterregten dynamoelektrischen Maschine (1) durch folgende Schritte:
- Paketieren von Blechen (8), insbesondere Stanzpaketieren zu einem Blechpaket (47) des Rotors (5), mit im Wesentlichen axial verlaufenden, umfänglich geschlossenen Ausnehmungen (18) zur axialen Aufnahme von Permanentmagneten (9), wobei die Ausnehmungen (18) Taschen (10) und Flusssperren (13) aufweisen,
- axiales Einbringen der Permanentmagneten (9) in die Taschen (10),
- Positionieren einer Verteilscheibe (16) an einer Stirnseite des Blechpakets (47) des Rotors (5) über Positionierelemente (40) der Verteilscheibe (16), welche Positionierelemente (40) sich in den axialen Aussparungen (41) und/oder axialen Ausnehmungen (18) des Blechpakets (47) verklemmen, wobei die Verteilscheibe (16) einen der Stirnseite des Blechpakets (47) zugewandten Verteilkanal (17) und zumindest eine Zuführung (15) zum Verteilkanal (17) aufweist,
- Zuführen einer thixotropischen Vergussmasse (20) unter einem vorgebbaren Druck über die Zuführung (15) der Verteilscheibe (16), und den Verteilkanal (17) in den Raum der Ausnehmungen (18) der magnetischen Pole (48), den die Permanentmagnete (9) in den Ausnehmungen (18) nicht einnehmen, solange, bis zumindest sämtliche axial verlaufende Spalte (12) ausgefüllt sind oder bis die Ausnehmungen (18) "voll" sind.

## Beschreibung

Die Erfindung betrifft ein Verfahren zur Herstellung eines Rotors einer permanenterregten dynamoelektrischen Maschine, einen damit hergestellten Rotor, eine permanenterregte dynamoelektrische Maschine mit einem derartigen Rotor als auch eine Verwendung einer permanenterregten dynamoelektrischen Maschine.

Industrielle Niederspannungsmotoren (<1000V Nennspannung) vor allem in den Wirkungsgradklassen IE4 und höher, werden üblicherweise mit Permanentmagnet bestückten Rotoren gefertigt. Dabei werden die Permanentmagnete in die hierfür vorgesehen Taschen des Blechpakets des Rotors eingebracht (sogenannte vergrabene Permanentmagnete). Die geometrischen Abmessungen dieser Taschen weisen hierbei gegenüber den Permanentmagneten ein Übermaß auf, um das axiale Einbringen der Permanentmagnete in die Taschen zu ermöglichen.

Nach dem Einbringen der Permanentmagnete in die Taschen müssen diese Permanentmagnete mechanisch mit dem Blechpaket des Rotors fixiert werden. Damit soll ein Spiel der Permanentmagnete in den Taschen vermieden werden, das bei mechanischen Einwirkungen wie Vibrationen, Fliehkräften während des Betriebs der permanenterregten dynamoelektrischen Maschine oder aufgrund von Magnetkräften u.a. eine Positionsänderung der Permanentmagnete verursacht.

Üblicherweise werden die Permanentmagnete hierfür mittels eines reaktiven Kunststoffklebers in die Taschen geklebt. Hierfür gibt es mehrere üblicherweise angewandte Vorgehensweisen.

Eine Möglichkeit ist das vorherige Einbringen eines pastösen Klebstoffes in die Tasche, welcher dann durch den später eingeschobenen Permanentmagneten derart verdrängt wird, dass dieser sich um den Permanentmagneten schmiegt. Dieses Einsetzen der Permanentmagnete in das pastöse Material führt allerdings zu einer gewissen Positionsungenauigkeit, da sich die verdrängte Paste nicht gleichmäßig um den Permanentmagneten schmiegt und sich somit nur punktuelle Verklebungen einstellen. Das Handling der aufmagnetisierten Permanentmagnete ist dabei nicht trivial und kann aufgrund der Magnetkräfte nicht ordentlich, in der wünschenswerten Weise, durchgeführt werden. Außerdem muss nach jedem Magneteinschub das Werkzeug einer Hilfsvorrichtung von der voreingebrachten Klebe-Paste gereinigt werden.

Eine weitere Möglichkeit die Permanentmagnete in der Tasche zu fixieren ist das spätere Vergießen der mit den Permanentmagneten bestückten Taschen mittels eines reaktiven Harzes, welches im Anschluss durch thermische Einwirkung (mittels eines Ofens, z.B. durch Temperatureinwirkung von 140°C für 2 Stunden) gehärtet werden muss. Dabei ist das Aufheizen und Abkühlen des gesamten Rotors ein zeit- und kostspieliger Prozessschritt.

Des Weiteren können jedoch derartige Temperaturen während der Einwirkzeit zu einer Teilentmagnetisierung der Permanentmagnete führen, was die Leistungsfähigkeit der permanenterregten dynamoelektrischen Maschine nachhaltig beeinträchtigt.

Des Weiteren ist es dabei notwendig das Bauteil im Vorfeld adäquat abzudichten, um zu verhindern, dass das flüssige Reaktivharz aus den dafür vorgesehen Bereichen austreten kann. Dies ist zum einen an den Stirnseiten des Rotorblechpaketes notwendig, aber auch auf der außenliegenden Mantelfläche des Rotors, da es in Bereichen dünner Wandungen (<1mm) die für den optimalen magnetischen Fluss notwendig sind, zum Durchdringen der Einzelbleche kommt und somit zu Verunreinigung und Tropfnasenbildung auf der äußeren Mantelfläche.

Um zu verhindern, dass in einem nachgelagerten Prozessschritt diese Flächen aufwändig gereinigt und nachbearbeitet werden müssen, wird im Vorfeld die Mantelfläche des Rotors durch einen Lackiervorgang versiegelt. Hierbei wird ebenfalls ein hochtemperaturhärtender Lack verwendet, was zu einem zusätzlichen Prozessschritt und einem weiteren Aufheiz- und Abkühlzyklus führt.

Bei einem Vollverguss des Rotorpakets mittels Kleber werden an den Stirnseiten des Rotors Pressscheiben angesetzt. Diese sind aus Aluminium und werden mit einer Presspassung auf die Welle unter axialer Verspannung des Rotorpakets aufgeschrumpft. Durch das Aufsetzen dieser aufgeheizten Pressscheiben unter axialer Verspannung wird das Rotorpakt axial verfestigt. Die Kraftübertragung zum Verspannen wird somit auf der Welle abgestützt. Dazu ist ein ausgeklügeltes Passungssystem u.a. von Pressscheibe zur Welle erforderlich.

Ausgehend davon liegt der Erfindung die Aufgabe zugrunde einen Rotor einer permanenterregten dynamoelektrischen Maschine bereitzustellen, insbesondere einer permanenterregten dynamoelektrischen Synchronmaschine dessen Herstellung vergleichsweise einfach ist, und die weniger aufwändige Prozessschritte erfordert. Der damit hergestellte Rotor soll bei einer permanenterregten dynamoelektrischen Maschine, insbesondere einer permanenterregten dynamoelektrischen Synchronmaschine die erforderliche Wirkungsgradklasse einhalten und damit für die Verwendungsfälle der permanenterregten dynamoelektrischen Maschine vergleichsweise günstige Verbrauchsdaten liefern.

Die Lösung der gestellten Aufgabe gelingt durch die Merkmalskombination der unabhängigen Ansprüche.

Vorteilhafte Ausgestaltungen der Erfindung sind den davon abhängigen Ansprüchen zu entnehmen.

Erfindungsgemäß gelingt die Lösung der gestellten Aufgabe durch ein Verfahren zur Herstellung des Rotors, insbesondere einer permanenterregten dynamoelektrischen Synchronmaschine, mittels einer Verteilscheibe und der Nutzung einer thixotropischen Vergussmasse zur Fixierung und Positionierung der Permanentmagnete in einem Blechpaket des Rotors.

Die Verteilscheibe, welche dem erfindungsgemäßen Vergussprozess zugrunde liegt und zumindest an einer Stirnseite des Blechpakets des Rotors angebracht wird, ist über Positionierelemente der Verteilscheibe an dem Blechpaket des Rotors fixiert. Damit wird eine axiale Abstützung der Verteilscheibe auf der Welle vermieden, was den Herstellungsprozess des Rotors weiter vereinfacht.

Diese Verteilscheibe wird formschließend, stirnseitig an das Blechpaket angebracht und kann optional im Nachgang des Vergussprozesses auch zur Wuchtung des Rotors genutzt werden.

Die Verteilscheibe weist auf der dem Blechpaket des Rotors zugewandten Seite zumindest einen umlaufenden, zum Blechpaket hin, insbesondere zu den magnetischen Polen des Rotors, offenen Verteilkanal auf.

Auf der dem Blechpaket abgewandten Seite der Verteilscheibe ist zumindest eine Injektionsöffnung, also eine Zuführung vorgesehen, um den Verteilkanal mit einer Vergussmasse zu speisen.

Optional weist der Verteilkanal - im umfänglichen Verlauf betrachtet - im Bereich einer Flusssperre eines magnetischen Pols des Rotors Erweiterungen des Verteilkanals auf, um ausreichend Vergussmasse für den jeweiligen magnetischen Pol bereitstellen zu können.

Der Verteilkanal und optional dessen Erweiterung schließen mit der Stirnseite des Blechpakets formschlüssig und dicht ab, um während des Vergussprozesses einen dementsprechenden Druck und damit die erforderlichen Scherkräfte in der Vergussmasse aufbauen zu können. Der umlaufende Verteilkanal dient der Versorgung der axialen Aussparungen der magnetischen Pole mit der Vergussmasse oder einem Kleber.

Die Fixierung der Verteilscheibe an der Stirnseite erfolgt über Positionierelemente, die beispielsweise zapfen- oder dübelähnlich ausgeführt sind und mit der Verteilscheibe einstückig ausgebildet sind.

Die Verteilscheibe mit ihren Positionierelementen wird vor dem Vergussprozess axial an der Stirnseite des Blechpakets des Rotors fixiert, indem die Positionierelemente in vorhandene Aussparungen, wie Trägheitsausnehmungen, Flusssperren etc. des Blechpakets verankert, insbesondere kraftschlüssig verankert werden.

Da sich die in die Taschen axial eingeschobenen Permanentmagnete, u.a. durch gegenseitige magnetische Abstoßkräfte teilweise wieder axial aus der Tasche herausschieben wollen, muss die aufgesetzte Verteilscheibe in der Lage sein, zumindest diese Kraft aufzunehmen. Das heißt, die aufgepresste Verteilscheibe darf sich aufgrund der axialen Verschiebekräfte der Permanentmagnete nicht von der Stirnseite des Blechpakets lösen, bis die Vergussmasse bzw. der Kleber in den dafür vorgesehenen Ausnehmungen und Spalte platziert ist.

Die "Widerstandskraft" der Positionierelemente bzw. Länge der Zapfen oder Dübel mit ihrer Klemmfunktion ist somit so zu bemessen, dass diese zumindest gleich, aber besser, höher ist als diese axialen Abstoßkräfte der Permanentmagnete.

Des Weiteren müssen auch die Kräfte des Vergussprozesses, die durch den Einfüllvorgang generierten Druck entstehen, kräftemäßig kompensiert werden, so dass sich die Verteilscheibe während des Vergussprozesses nicht von der Stirnseite des Blechpakets ablöst und weiterhin seinen axialen Formschluss beibehält.

Die angegossenen Zapfen sind deshalb erfindungsgemäß mit einem leichten Übermaß gegenüber den dazu korrespondierenden Öffnungen des Blechpakets ausgebildet, idealerweise mit einer Kreuzkontur.

Als Alternative dazu ist auch eine Spreizform ähnlich einem Dübel vorstellbar.

Diese Positionierelemente ermöglichen ein koaxiales Verklemmen oder Verkrallen der Verteilscheibe an der Stirnseite des Blechpakets.

Radial weiter außen liegend sind an der Verteilscheibe optional Fixierelemente vorgesehen. Diese erlauben eine auch im Betrieb der permanenterregten dynamoelektrischen Maschine eine Fixierung der Verteilscheibe an der Stirnseite des Blechpakets des Rotors aufgrund einer Verklebung in dafür vorgesehene Flusssperren.

Der Verteilkanal kann in seinem umfänglichen Verlauf kreisrund ausgeführt sein. Ebenso ist es möglich den Verteilkanal mit radial und/oder axial ersteckenden Erweiterungen und/oder gewellt auszuführen, um möglichst schnell einen ausreichenden Füllgrad in den Ausnehmungen zu erhalten. Dabei "folgt" der Verlauf des Verteilkanals im Wesentlichen der Polanordnung. Dies betrifft sowohl den Überdeckungsbereich der Verteilscheibe als auch den Überdeckungsbereich des Verteilkanals an der Stirnseite des Blechpakets.

Der Überdeckungsbereich der Verteilscheibe ist dabei immer größer als der Überdeckungsbereich des Verteilkanals.

Die Verteilscheibe ist je nach Ausführung des Verteilkanals geeignet für alle Anordnungen von Permanentmagneten innerhalb eines magnetischen Pols im Blechpaket des Rotors, wie radiale, tangentiale, gerade, V-Anordnung oder eine mehrreihige Anordnung.

Die Verteilscheibe ist optional auf der dem Verteilkanal abgewandten Seite der Verteilscheibe zusätzlich mit Lüfterflügeln ausgestattet, um im Betreib der permanenterregten Synchronmaschine bewegte Luft im Motorraum, insbesondere Wickelkopfraum zu erzeugen und somit eine Entwärmung des Rotors und/oder des Wickelkopfraumes zu verbessern.

Die Verteilscheibe kann als Spritzgussteil, als Tiefziehteil oder in 3D Druck-Verfahren hergestellt werden. Vorzugsweise ist die Verteilscheibe aus Kunststoff oder nicht magnetischem Metall gefertigt. Die Positionierelemente, wie Zapfen oder Dübel oder beispielsweise auch die optionalen Lüfterflügel bilden mit der Verteilscheibe eine einstückige Komponente.

Während des Ausspritzvorgangs der Ausnehmungen über die Verteilscheibe wird das Blechpaket des Rotors über diese Verteilscheiben mit einem Werkzeug axial verspannt, um eine Abdichtung der Verteilscheibe zum Blechpaket bzw. der einzelnen Bleche zueinander auf jeden Fall zu gewährleisten.

Die Verteilscheibe wird an dem Blechpakets des Rotors axial fixiert und positioniert und benötigt nicht die Welle dazu.

Durch Einsatz der Verteilscheibe und deren Abdichtung des zur Stirnseite hin offenen Verteilkanals wird das Verspannwerkzeug vor Verschmutzung geschützt und kann deshalb im Anschluss für Folgeaktionen unmittelbar weiter benutzt werden.

Das Verspannwerkzeug dient auch der Paketierung des Blechpakets des Rotors, insbesondere während des Ausspritzvorganges. Die Paketierung - also eine axiale Krafteinwirkung auf das Blechpaket - erfolgt dabei über die Verteilscheiben und/oder auch über den "radialen Freiraum" zwischen Verteilscheibe und Welle.

Die Verteilscheibe kann in Richtung Rotorpaket elastische Geometrien aufweisen, alternativ Dichtungsmaterial, welches eine axiale Abdichtung während der Verspannung während des Vergussprozesses mit Vergussmasse bzw. Kleber verbessern.

Optional werden auf beiden Seiten des Blechpakets des Rotors, also den Stirnseiten des Blechpakets, Verteilscheiben positioniert, um die Paketierung der Bleche zu verbessern. Dabei ist zumindest eine Verteilscheibe mit einer Zuführung, also einer Kleber-Versorgungs-Öffnung ausgestattet. Um beide Teile gleich zu gestalten, kann generell eine Versorgungsbohrung vorgesehen werden, die durch eine Gusshaut verschlossen ist. Bei Bedarf kann diese Gusshaut vor dem Vergießen aus der Verteilscheibe ausgebrochen werden. Es müssen demnach weniger Teile vorgehalten werden.

Dieses Herstellverfahren eignet sich auch für - axial betrachtet - gestaffelte Teilblechpakete des Rotors. Die Ausnehmungen der einzelnen magnetischen Pole weisen in ihrem axialen Verlauf ausreichende Überschneidungen auf, um eine Vergussmasse auch bis an das andere axiale Ende des Blechpakets eines magnetischen Pols fördern zu können. Flusssperren axial folgender Teilblechpakete eines magnetischen Pols bzw. einer Ausnehmung haben in ihrer Fläche ausreichend Überschneidung. Das gesamte Blechpaket hat jedoch - wie oben bereits ausgeführt - mindestens auf einer Stirnseite eine Verteilscheibe.

Bei nur einer Verteilscheibe sind die Ausnehmungen auf der anderen Stirnseite des Blechpakets verschlossen, z.B. durch eine Endscheibe, so dass keine Vergussmasse austreten kann und sich der thixotropische Effekt bei der Vergussmasse einstellen kann.

Bei dem Herstellverfahren des Rotors mit vergrabenen Permanentmagneten, insbesondere einer permanenterregten dynamoelektrischen Synchronmaschine werden dabei folgende Schritte durchgeführt:
- Es erfolgt ein Paketieren von Blechen, insbesondere ein Stanzpaketieren zu einem Blechpaket des Rotors, mit im Wesentlichen axial verlaufenden, umfänglich geschlossenen Ausnehmungen zur axialen Aufnahme der Permanentmagnete, wobei die Ausnehmungen Taschen und Flusssperren aufweisen.
- Anschließend werden die Permanentmagnete axial in die Taschen eingesetzt.
- Es folgt das Positionieren der Verteilscheibe an einer Stirnseite des Blechpakets des Rotors über Positionierelemente der Verteilscheibe, wobei die Positionierelemente in die axialen Ausnehmungen und/oder axialen Aussparungen des Blechpakets ragen und/oder sich dort verklemmen, wobei die Verteilscheibe einen der Stirnseite des Blechpakets zugewandten offenen Verteilkanal und zumindest eine Zuführung zum Verteilkanal aufweist.
- Über diese Zuführung wird nunmehr eine thixotropische Vergussmasse unter einem vorgebbaren Druck der Verteilscheibe und dem Verteilkanal in den Raum der Ausnehmungen der magnetischen Pole zugeführt, den die Permanentmagnete in den Ausnehmungen nicht einnehmen, und zwar so lange, bis zumindest sämtliche axial verlaufende Spalte ausgefüllt sind oder bis die Ausnehmungen "voll" sind.

Bei dem Herstellverfahren eines gestaffelten Rotors mit vergrabenen Permanentmagneten, insbesondere einer permanenterregten dynamoelektrischen Synchronmaschine werden dabei folgende Schritte durchgeführt:
- Es erfolgt ein axiales Paketieren von Blechen insbesondere Stanzpaketieren zu Teilblechpaketen, wobei die Teilblechpakete im Wesentlichen axial verlaufende Ausnehmungen zur Aufnahme von Permanentmagneten aufweisen, wobei die Ausnehmungen Taschen und Flusssperren aufweisen.
- Anschließend werden die Permanentmagnete axial in die Taschen der Teilblechpakete eingesetzt.
- Danach folgt ein umfänglich versetztes Paketieren der einzelnen Teilblechpakete zu einem Blechpaket des Rotors, indem die Teilblechpakete nacheinander, um einen vorgebbaren Winkel umfänglich versetzt auf der Welle jeweils drehfest angeordnet werden, so dass sich, axial betrachtet, ein gestaffelter Verlauf der mit Permanentmagneten versehenen Taschen der magnetischen Pole ergibt.

- Es folgt das Positionieren der Verteilscheibe an einer Stirnseite des Blechpakets des Rotors über Positionierelemente der Verteilscheibe, wobei die Positionierelemente in die axialen Ausnehmungen und/oder axialen Aussparungen des Blechpakets ragen und/oder sich dort verklemmen, wobei die Verteilscheibe einen der Stirnseite des Blechpakets zugewandten offenen Verteilkanal und zumindest eine Zuführung zum Verteilkanal aufweist.
- Über diese Zuführung wird nunmehr eine thixotropische Vergussmasse unter einem vorgebbaren Druck der Verteilscheibe und dem Verteilkanal in den Raum der Ausnehmungen der magnetischen Pole zugeführt, den die Permanentmagnete in den Ausnehmungen nicht einnehmen, und zwar so lange, bis zumindest sämtliche axial verlaufende Spalte ausgefüllt sind oder bis die Ausnehmungen "voll" sind.

Als Vergussmasse bzw. Kleber für das Verfahren wird ein "Gapfiller", vorzugsweise thixotropiertes 2-K Epoxy zum Kleben der Permanentmagnete in ihren jeweiligen Taschen verwendet.

Ein Paketieren der Bleche, vor allem der Teilblechpakete kann auf einer Hilfswelle erfolgen. Ebenso ist es möglich die Bleche zu verkleben. Ebenso ist Stanzpaketieren der Bleche möglich, um ein Blechpaket aus Einzelblechen oder Teilblechpaket zu erhalten. In das Blechpaket bzw. die Teilblechpakete sind die Permanentmagnete einsetzbar.

Zusätzliches Paketieren, sofern erforderlich, erfolgt dann, wenn sich das Blechpaket auf der eigentlichen Welle befindet. Dabei wird das Blechpaket mittels zweier Scheiben zusammengepresst. Zumindest eine der beiden Scheiben kann dabei eine Verteilscheibe sein.

Eine Paketierung des Blechpakets kann auch über Zugankerverbindungen erfolgen.

Das Blechpaket des Rotors bzw. die Teilblechpakete werden vorzugsweise drehfest auf die Welle geschrumpft oder kalt aufgepresst.

Das Blechpaket des Rotors kann auch kalt gefügt werden, um die erforderlichen Drehmomentfestigkeit und axiale Festigkeit des Blechpakets auf der Welle zu erhalten. Die axialen Fügekräfte werden dabei reduziert.

Die Verteilscheibe kann somit eine oder mehrere der folgenden Funktionen erfüllen. Paketieren des Blechpakets des Rotors auf der Welle, Verteilung der Vergussmasse, Beitrag zur Kühlung der dynamoelektrischen Maschine und Wuchtung des Rotors.

Ausnehmung im Blechpaket des Rotors sind dabei Ausstanzungen der Bleche, die paketiert zu einem Blechpaket oder Teilblechpaket, axial hintereinander angeordnet sind. Die Ausnehmungen weisen sowohl Taschen als auch die Flusssperren auf. Die Taschen sind zur Aufnahme der oder des Permanentmagneten vorgesehen.

In den Raum der Ausnehmungen ragen optional Haltelemente, wie Haltenasen zur ergänzenden Fixierung und Halterung der Permanentmagnete zumindest während der Fertigung und/oder im Betrieb der dynamoelektrischen Maschine u.a. gegenüber Fliehkraftbeanspruchungen.

Eine Drehmomentfestigkeit des Blechpakets auf der Welle wird erreicht, indem Blechzungen an Fädelnuten, die am Innendurchmesser zumindest einzelner Bleche angeordnet sind und in die Wellenbohrung hineinragen. Idealerweise ragen diese ca. 0,2 bis 0,3 mm in die Wellenbohrung hinein. Je nach Achshöhe der dynamoelektrischen Maschine können diese Zahl-Werte auch überschritten bzw. unterschritten werden.

Diese Blechzungen in den Fädelnuten werden bereits beim Stanzen der Einzelbleche mithergestellt, so dass kein zusätzlicher Fertigungsaufwand notwendig ist.

In einer Ausführung können nun die Fädelnuten und damit die Blechzungen und Zwischenraumausnehmung eines Bleches durch einen Stanzprozess um 180° versetzt am Innendurchmesser der Bleche positioniert werden. Damit ergibt sich bei Aneinanderreihung der Bleche mit einem vorgebbaren Verdrehwinkel von 90° zwischen Fädelnuten und Zwischenraumausnehmung, die eine Blechzunge in einen Freiraum einer Zwischenraumausnehmung ragen lässt, ein Blechpaket, das jeweils ein axialer Freiraum von einer Blechstärke vor und nach jeder Blechzunge vorsieht. Damit besteht die Möglichkeit einer leicht federnden axialen Verformung der Blechzunge. Beim Fügen des Blechpaketes mit den Blechen auf eine Welle weichen die Blechzunge bzw. Blechzungen eines Bleches dabei axial in diese Zwischenraumausnehmung des benachbarten Bleches aus.

In Rotationsrichtung weist nunmehr diese Blechzunge jedoch eine höhere Steifigkeit auf. Beim axialen Fügen des Blechpakets des Rotors streifen diese Blechzungen längs der Welle über die bearbeitete Oberfläche. Dadurch wird während des Fügevorgang bereits ein geringer Formschluss in der Breite der Blechzungen mit der Welle ausgebildet. Der axiale Fügekraftanteil der Blechzungen ist im Verhältnis zur hauptsächlich zylindrischen Fassung vergleichsweise gering, da diese sich leicht umbiegen können. Die Summe der Formschlüsse jedoch ergeben eine vergleichsweise hohe Verdrehsicherheit des gesamten Blechpakets auf der Welle.

Die durch die Blechzungen erreichte Federung gleicht Aufweitungen der Wellenbohrung durch Erwärmung im Betrieb oder Fliehkraftbeanspruchungen sicher aus, ohne Einbußen an der Positionierung, insbesondere an der Verdrehsicherheit aufzuweisen.

Ein axiales Verhaken der Blechzungen bietet somit auch eine axiale Sicherheit gegen Verrutschen des Blechpakets auf der Welle. Die Fertigungsfügemethode kann ohne zusätzliche Bearbeitung auch für üblicherweise geschrägte Blechpakete des Rotors angewandt werden.

Um dabei eine ausreichende Drehmomentfestigkeit zu erzielen, werden somit durch zusätzliche geringe Formschlüsse der einzelnen Bleche des Rotors mit der Welle die erforderliche Drehmomentfestigkeit erreicht.

Ebenso sind andere Möglichkeiten vorhanden, das Drehmoment vom Blechpaket auf die Welle zu übertragen, wie Passfederverbindungen etc.

Die Vergussmasse kann in allen möglichen Winkellagen der Achse des Rotors in das Blechpaket des Rotors eingefüllt werden.

Vorteilhafterweise erfolgt die Beschickung des mit Permanentmagneten bestückten Rotors mit Vergussmasse als aufsteigender Verguss bei erhöhtem Vergussdruck. Die Achse des Rotors ist dabei im Wesentlichen vertikal. Insbesondere durch einen aufsteigenden Verguss kann in einfacher Art und Weise eine blasenfreie Applikation herbeigeführt werden.

In einem anderen möglichen Verfahrensschritt erfolgt diese Beschickung des mit Permanentmagneten bestückten Rotors mit Vergussmasse von oben, d.h. die Vergussmasse wird von obenher eingefüllt. Die vorhandene Luft in den Ausnehmungen drückt sich dabei zwischen den Blechen heraus. Es besteht somit keine Gefahr einer Lunkerbildung. Aufgrund des thixotropischen Verhaltens der Vergussmasse tritt kein Kleber durch bzw. zwischen den Blechen des Blechpakets heraus.

Der Einfüllvorgang erfolgt unabhängig davon, ob die Pole des Rotors achsparallel verlaufen, geschrägt verlaufen oder gestaffelt angeordnet sind. Entscheidend ist immer, dass die Vergussmasse axial durch die Flusssperren eines Pols und/oder die oben erwähnten Spalte dringen kann und die Hohlräume eines Pols füllen kann.

Bei dem Vergussprozess wird ein statisches/dynamisches Mischrohr verwendet, um das Reaktivgemisch in situ zu mischen und direkt im Anschluss über die Verteilscheibe auf einer Stirnseite des Rotors in den Rotor zu applizieren. Es können auch auf beiden Stirnseiten des Rotors Verteilscheiben vorgesehen sein, um eine Bestückung des Rotors von beiden Seiten vorzunehmen. Dabei ist die Achse des Rotors vorzugsweise horizontal ausgerichtet.

Dabei sind die Verteilscheiben entweder identisch oder derart ausgebildet, dass jede Verteilscheibe lediglich die Hälfte der Pole des Rotors mit Vergussmasse versieht.

Eine beidseitige Beschickung mit Vergussmasse kann vor allem bei axial langen Rotoren von Vorteil sein.

Über einen oder mehrere geeignete Injektionsanschlüsse an der Verteilerscheibe können Drücke von bis zu 10 bar, vorzugsweise 4,5 bar, appliziert werden, wodurch die vorzugsweise frisch gemischte, thixotropierte Vergussmasse fließfähig wird und axial, insbesondere axial aufsteigend, in die verbleibenden geometrischen Zwischenräume der Ausnehmungen des Rotors gelangt.

Es wird also die thixotropische Vergussmasse in einem statischen oder dynamischen Mischrohr in situ gemischt, wobei die Vergussmasse bei der Zuführung eine Temperatur bis 60°C, insbesondere bis 30°C aufweist, und mit einer Fließgeschwindigkeit von bis zu 10 mm pro Sekunde zugeteilt wird, wobei dabei ein Druck von bis zu 10 bar, insbesondere 4,5 bis 5 bar herrscht, also im Wesentlichen bei Umgebungstemperatur.

Der Prozess des Vergießens kann also nahezu bei Umgebungstemperatur erfolgen, was den Prozess vereinfacht und ein nahezu zeitlich daran unmittelbar anschließendes Weiterverarbeiten des Rotors ermöglicht.

Als Zwischenräume sind dabei die Flusssperren, die Spalte zwischen den Permanentmagneten und den jeweiligen Blechen zu verstehen, aber nicht oder fast nicht die Schlitze zwischen den Einzelblechen.

Mit anderen Worten, die Radialebenen zwischen den Einzelblechen sollen nicht mit der Vergussmasse versehen werden und auch nicht versehen sein. Dies kann insbesondere durch eine axiale Paketierung zusammen mit der thixotropischen Vergussmasse gewährleistet werden. Vergussmasse in diesen Radialebenen soll vermieden werden. Dabei füllt die Vergussmasse nur und ausschließlich die Ausnehmungen, die Permanentmagnete aufweisen, also die Flusssperren und die Spalte zwischen den Blechen und den Permanentmagneten, also die Fließkanäle, aber keine radialen Spalte zwischen den einzelnen Blechen, also die Ebenen, die senkrecht zur Achse stehen.

Ebenso werden Trägheitsöffnungen des Rotors nicht mit Vergussmasse versehen. Auch die Bohrungen zur Aufnahme der Zapfen/Dübel der Verteilscheibe werden in der Regel nicht mit Vergussmasse beaufschlagt. D.h. die Zapfen/Dübel sind nicht mit Vergussmasse umgeben.

Die Zapfen/Dübel der Verteilscheibe sind in einer Ausführung jedoch mit Vergussmasse umgeben, sofern sie in den Flusssperren positioniert und dort verankert werden.

Nach der vollständigen Befüllung der Ausnehmungen wird der Druck abgelassen. Eine Detektion, dass das Blechpaket mit den entscheidenden Zwischenräumen "voll" ist, erfolgt über den statischen im Vergleich zu dem dynamischen Druck (Detektion z.B. über Druckaufbau dynamischer versus statischer Druck).

Sobald alle Fließkanäle vollständig gefüllt sind, kommt der Fluss der Vergussmasse zum Erliegen und ist durch eine Änderung des Gesamtdrucks gemäß Bernoulli detektierbar. Bernoullische Druckgleichung (Gesamtdruck = Dynamischer Druck + Statischer Druck).

Ebenso ist eine optische Kontrolle des Vergussprozesses möglich, die einen nicht gewollten Austritt an der Manteloberfläche des zylindrischen Blechpakets detektiert. Dies geschieht vorzugsweise an den schmalen Stegen, die als Randbegrenzungen der Flusssperren zur Manteloberfläche fungieren. Diese können, radial betrachtet, nur wenige Millimeter oder gar nur Bruchteile von Millimetern betragen.

Die Vergussmasse im Blechpaket des Rotors geliert danach drucklos bei Raumtemperatur und härtet innerhalb von 24 Stunden vollständig aus.

Eine Weiterarbeit an und mit dem Rotor ohne mechanische Belastung ist schon nach ca. 1 Stunde möglich. Ein Durchdringen des Materials, also der Vergussmasse, durch die Einzelbleche ist durch die Thixotropierung der Vergussmasse verhindert, sodass auf einen vorangehenden Lackierprozess der außenliegenden Mantelfläche verzichtet werden kann.

Erfindungsgemäß wird nunmehr der Rotor mit seinen Permanentmagneten über eine erfindungsgemäße Verteilscheibe mit einer thixotropierte Vergussmasse vergossen, welche bei Raumtemperatur geliert und vollständig härtet.

Durch die hohe Füllung und Nutzung von Thixotropieradditiven können mittels eines Druckverfahrens die Taschen aufsteigend gefüllt werden, ohne dass jedoch die Reaktivmasse durch kleine Schlitze, wie z.B. zwischen den Einzelblechen, entweichen kann.

Als Vergussmasse bzw. Kleber wird ein "Gapfiller", vorzugsweise thixotropiertes 2-K Epoxy zum Kleben der Permanentmagnete in ihren jeweiligen Taschen verwendet, mit einer Temperatureignung bis ca. 160 °C. Herkömmliche Klebesysteme sind nur bis 120 °C geeignet.

Bei dem beanspruchten Verfahren weist die Vergussmasse vorteilhafterweise thixotropisches Verhalten auf, wobei die Viskosität infolge eines äußeren steuerbaren Einflusses (z.B. Druck) abnimmt und nach beendigter Beanspruchung wieder in die Ausgangsviskosität zurückkehrt.

Durch Einsatz der thixotropierten Vergussmasse kann direkt unmittelbar nach dem Ausspritzen das Verspannwerkzeug gelöst werden. Das Vergussmasse fließt dabei nicht weg. Die Paketierung des Blechpakets des Rotors bleibt erhalten.

Bei konstanter Scherung (Druck) nimmt mit der Zeit die Viskosität der Vergussmasse ab - nach Beendigung der Scherbelastung steigt die Viskosität der Vergussmasse zeitabhängig wieder an. Durch den zunächst statischen Druck, dann aber mit der Bewegung der Vergussmasse dynamischen Drucks, wird zunächst ein viskoses Fliesen der Vergussmasse erzeugt, wodurch sich die Scherkräfte ergeben.

Eine Thixotropierung der Vergussmasse wird durch Zugabe und Dispergieren von pyrogener Kieselsäure Aerosil im Bereich zwischen 0,1-0,5 vol.-% erreicht.

Bevor die Vergussmasse über eine Leitung oder Schlauch dem Rotor über die Verteilscheibe zugeführt wird, werden deren Bestandteile von mindestens zwei getrennt vorliegenden Komponenten durch Relativbewegung so umpositioniert, dass eine gleichmäßige und klar definierte Verteilung der zu mischenden Komponenten vorliegt.

Als Vergussmasse zur Fixierung von Permanentmagneten in dem Blechpaket des Rotors einer permanenterregten Synchronmaschine ist als Basisharzmaterial ein Zwei-Komponenten-Reaktivharz vorgesehen, in dem in einer vorgebbaren Menge wärmeleitfähige und/oder eine Gelierzeit der Vergussmasse beeinflussende Additive vorhanden sind.

Als zweikomponentiges Basisharzmaterial wird vorzugsweise ein Reaktivharz auf Basis von Epoxy/Amin oder z.B. Polyurethan/ Isocyanat eingesetzt. Eine Gelierung bei Raumtemperatur ist hierbei nach wenigen Minuten bis einigen Stunden einstellbar, so dass ohne zusätzliche Erwärmung (und damit einhergehender weiterer Verflüssigung des Harzgemisches) eine weitgehende Verfestigung der Vergussmasse eintritt. Mit anderen Worten, eine vollständige Härtung bei Raumtemperatur ohne Nachtemperierung ist somit möglich.

Als weiteres Grundmaterial eignen sich auch Polysiloxane und Silikon.

Die Mischung von mindestens zwei Komponenten kann dabei durch einen dynamischen Mischer erfolgen, z.B. einen Speedmixer.

Eine technisch einfachere und kostengünstigere Möglichkeit stellt die statische Mischung der Komponenten dar.

Es stellt sich damit bei geringen Scherkräften (ca. 10 Pa) eine Scherviskosität von ca. 10⁵-10⁷ mPa ein. Bei erhöhten Scherkräften (ca. 200 Pa) tritt eine Scherviskosität von ca. 10²-10⁴ mPa ein. Diese Scherkräfte werden durch Druck in die Vergussmasse eingeleitet.

Eine Erholung des Materials, respektive der Viskosität, ergibt sich nach Abnahme der Scherkräfte (Abnahme des Druckes) innerhalb weniger Minuten, so dass es zu einer Selbstverfestigung der Vergussmasse in den vorgesehenen Spalten und/oder Flusssperren kommt und keine Fließwege durch dünne Spalte, insbesondere zwischen den Einzelblechen des Blechpakets des Rotors mehr entstehen.

Das Aushärten der Vergussmasse geschieht ohne axiale Verspannung, somit ist die Vergussmasse/der Kleber entlang der Flusssperren oder Spalte nicht vorgespannt ist und kann später nicht reißen.

Der Volumenschrumpf eines derartig gefüllten Rotors liegt bei unter 1%. Damit werden u.a. Lunkerbildungen vermieden, die die Positionierung der Permanentmagnete und die elektromagnetischen und wärmeleitenden Eigenschaften beeinträchtigen könnten.

Die vorzugsweise raumtemperaturhärtende Vergussmasse kann, neben einem stark thixotropierten rheologischen Verhalten, durch geeignete Additive wärmeleitfähig (>0,5 W/mK) eingestellt werden. Diese Additive werden vor der Zuführung in den Rotor, insbesondere der Verteilscheibe der Vergussmasse, beigemischt. Dies führt im Betrieb der dynamoelektrischen Maschine zu einer verbesserten Wärmeabfuhr aus den Permanentmagneten, da diese durch Wirbelströme und/oder Luftspaltharmonischen aufgeheizt werden. Damit sind die Permanentmagnete mit vergleichsweise verbesserter Wärmeleitfähigkeit an das Blechpaket des Rotors gekoppelt.

Die Wärmeleitfähigkeit der Vergussmasse kann durch Zugabe oder Zumischen verschiedener Füllstoffe erreicht werden. Die dabei vorgesehenen Additive sind Quarzmehl, Quarzgut, BorNitrid (BN), Alox, Kreide. Die einzelnen Komponenten sind zusammen oder auch einzeln beimischbar und können somit bis zu 40 Vol.% der gesamten Vergussmasse ausmachen.

Durch das erfindungsgemäße Verfahren zur Herstellung eines Rotors einer permanenterregten Synchronmaschine ergeben sich folgende Vorteile:
Das Verfahren ist einfacher und kostengünstiger als bisher bekannte Verfahren, bei denen die Verteilscheiben aus Aluminium sind und diese mit einer Presspassung auf der Welle fixiert sind.

Durch das erfindungsgemäße Verfahren zur Herstellung eines Rotors einer permanenterregten Synchronmaschine ergibt sich eine sichere Methode der axialen Abdichtung der Verteilscheibe zur Stirnseite des Blechpakets, da eine diesbezüglich erforderlich axiale Verspannkraft während des Ausspritzens mit Schließkraft über ein dementsprechendes Werkzeug einstellbar ist.

Damit sind vergleichsweise hoher Arbeitsdrücke der Vergussmasse für das Ausspritzen über die Verteilscheibe möglich, die im Bereich von 2-10 bar, vorzugsweise 4 bar liegen und somit u.a. eine Lunkerbildung unterbinden.

Durch die einzelnen Prozessschritte, die u.a. bei Umgebungstemperatur erfolgen, keine unnötigen Rüstzeiten erfordern, wie Säuberung der Verspannwerkzeuge, lassen sich kurze Prozesszeiten bei der Herstellung eines Rotors und demzufolge auch bei einer dynamoelektrischen Maschine gewährleisten.

Eine mit einem derartigen Rotor ausgestattete Synchronmaschine weist eine hohe Effizienzklasse auf und ist somit für den Antrieb vor allem für den Dauerbetrieb von Kompressoren, Verdichtern, Förderbändern, Lüfter etc. geeignet.

Die Erfindung sowie weitere vorteilhafte Ausgestaltungen der Erfindung werden anhand prinzipiell dargestellter Ausführungsbeispiele näher erläutert, darin zeigen:
- FIG 1: prinzipieller Längsschnitt einer dynamoelektrischen Maschine,
- FIG 2: prinzipieller Längsschnitt eines Rotors mit vergrabenen Permanentmagneten,
- FIG 3: eine Verteilscheibe,
- FIG 4: eine perspektivische Darstellung der Verteilscheibe,
- FIG 5: eine teilperspektivische Darstellung der Verteilscheibe am Blechpaket des Rotors,
- FIG 6: eine Stirnseite des Rotors,
- FIG 7: eine Schnittdarstellung gemäß FIG 6,
- FIG 8: eine teilperspektivische Darstellung der Verteilscheibe am Rotor,
- FIG 9: eine Stirnseite des Rotors mit einer Verteilscheibe,
- FIG 10: ein Rotor mit zwei Verteilscheiben,
- FIG 11: eine perspektivische Darstellung einer Verteilscheibe am Rotor,
- FIG 12: ein Längsschnitt des Rotors, der aus umfänglich versetzt angeordneten Teilblechpaketen aufgebaut ist,
- FIG 13, 14: teilperspektivische Darstellungen einer Verteilscheibe,
- FIG 15: ein Querschnitt des Rotors,
- FIG 16: eine teilperspektivische Darstellung einer Stirnseite des Rotors mit einer Verteilscheibe,
- FIG 17: Darstellung eines magnetischen Pols,
- FIG 18: Ablaufdiagramm eines möglichen Verfahrensablaufs.

Es sei angemerkt, dass sich Begriffe wie "axial", "radial", "tangential" etc. auf die in der jeweiligen Figur bzw. im jeweils beschriebenen Beispiel zum Einsatz kommende Achse 7 beziehen. Mit anderen Worten beziehen sich die Richtungen axial, radial, tangential stets auf eine Achse 7 des Rotors 5 und damit auf die entsprechende Symmetrieachse des Stators 2. Dabei beschreibt "axial" eine Richtung parallel zur Achse 7, "radial" beschreibt eine Richtung orthogonal zur Achse 7, auf diese zu oder auch von ihr weg, und "tangential" ist eine Richtung, die in konstantem radialem Abstand zur Achse 7 und bei konstanter Axialposition kreisförmig um die Achse 7 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 5 und Stator 2, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse 7 ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die beschriebenen Ausführungen im allgemeinen Beschreibungsteil als auch in der konkreten Figurenbeschreibung können beliebig kombiniert werden. Ebenso sind auch Einzelmerkmale der jeweiligen Ausführungen kombinierbar, ohne das Wesen der Erfindung zu verlassen.

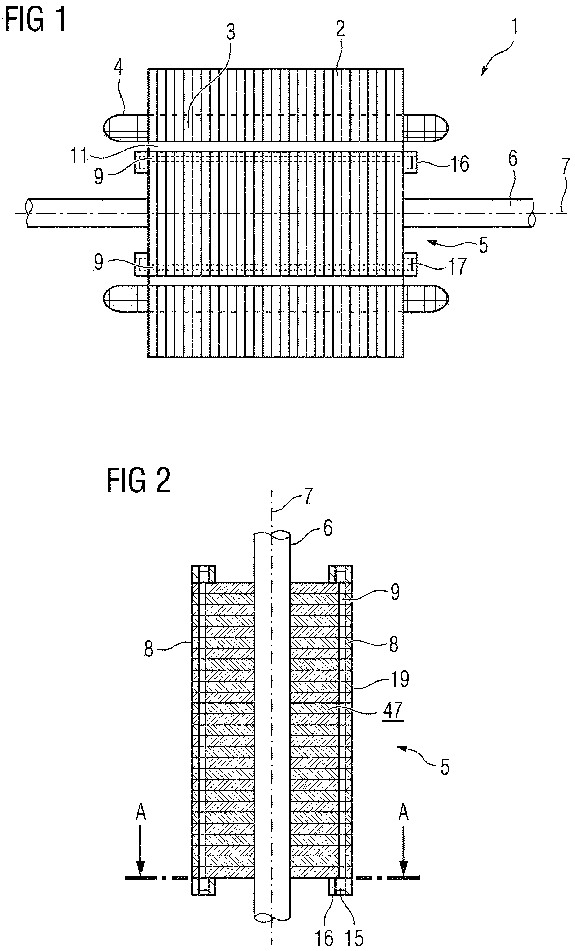

FIG 1 zeigt in einer prinzipiellen Längsdarstellung eine dynamoelektrische Maschine 1, in diesem Fall eine permanenterregte Synchronmaschine. Diese permanenterregte Synchronmaschine weist einen Stator 2 auf, der in nicht näher dargestellten Nuten ein Wicklungssystem 3 aufweist, das an den Stirnseiten des Stators 2 einen Wickelkopf 4 ausbildet. Durch elektromagnetische Wechselwirkung über einen Luftspalt 11 wird durch ein bestromtes Wicklungssystem 3 ein Rotor 5 in Rotation um eine Achse 7 versetzt. Der Rotor 5, der koaxial zum Stator 2 angeordnet ist, weist in axial verlaufenden Ausnehmungen 18 angeordnete Permanentmagnete 9 auf, die auch als vergrabene Permanentmagnete 9 bezeichnet werden. Die Bleche 8 des Rotors 5 sind als Blechpaket 47 paketiert und mit einer Welle 6 drehfest verbunden.

FIG 2 zeigt einen Rotor 5, dessen Blechpaket 47 durch zwei Endscheiben paketiert ist, wobei zumindest eine Endscheibe als Verteilscheibe 16 ausgeführt ist. Diese Verteilscheibe 16 weist auf der einer Stirnseite des Blechpakets 47 zugewandten Seite zumindest einen Verteilkanal 17 auf, der über eine Zuführung 15 füllbar ist. Über diese Zuführung 15 wird bei dem Vergussprozess der Verteilkanal 17 mit einem Vergussmaterial 20, insbesondere einem thixotropischen Material unter einem vorgebbaren Druck beaufschlagt.

Die Verteilscheibe 16 kann auch mehrere Zuführungen 15 aufweisen, um die zuführbare Menge an Vergussmaterial 20 zu steigern.

Ausstanzungen der einzelnen Bleche 8 bilden, in einem Blechpaket 47 paketiert die im Wesentlichen axial verlaufenden Ausnehmungen 18. Die Ausnehmungen 18 des Blechpakets 47 verlaufen dabei entweder achsparallel, geschrägt oder gestaffelt.

Bei einer achsparallelen Anordnung fluchten die Ausnehmungen 18. Bei einer geschrägten Anordnung, ist jedes Blech 8 gegenüber dem axial nachfolgenden Blech um einen vorgebbaren Winkel umfänglich versetzt angeordnet.

Umfänglich versetzt, axial angeordnete Teilblechpakete 42 bilden ein gestaffeltes Blechpaket 47.

Unabhängig von der Gestaltung des Blechpakets 47 (gerade, geschrägt, gestaffelt) ist immer, dass die Vergussmasse 20 von der Verteilscheibe 16 axial durch die Flusssperren 13 eines Pols 48 und/oder die oben erwähnten Spalte 12 einer Ausnehmung 18 dringen kann und die Hohlräume eines Pols 48 füllen kann.

Die Ausnehmungen 18 weisen sowohl Taschen 10 als auch die Flusssperren 13 auf. Die Taschen 10 sind zur Aufnahme der oder des Permanentmagneten 9 vorgesehen. In den Raum der Ausnehmungen 18 ragen Haltenasen 49 und Halteelemente 46 u.a. zur ergänzenden Fixierung und Halterung der Permanentmagnete 9 während der Fertigung und im Betrieb der dynamoelektrischen Maschine gegenüber Fliehkraftbeanspruchungen.

Idealerweise sind die Permanentmagnete 9 ohne Spalte zu den Blechen 8 in den Ausnehmungen 18 platziert - bilden also eine lückenlose und vollflächige Anlage. Eine derartige komplementäre Anordnung ist aber aus fertigungstechnischen Gründen nicht möglich. Es entstehen fertigungsbedingt axial verlaufende Spalte 12 zwischen den Permanentmagneten 9 und den Blechen 8, die geschlossen werden müssen.

Ein Paketieren der Bleche 8 oder Teilblechpakete 42 kann auf einer Hilfswelle erfolgen. Ebenso ist es möglich die Bleche 8 zu verkleben. Ebenso ist Stanzpaketieren der Bleche 8 möglich, um ein Blechpaket 47 oder Teilblechpaket 42 zu erhalten in das die Permanentmagnete 9 einsetzbar sind.

Optional zusätzliches Paketieren erfolgt dann, wenn sich das Blechpaket 47 auf der eigentlichen Welle 6 befindet. Dabei wird das Blechpaket 47 mittels zweier Scheiben, insbesondere zumindest einer Verteilscheibe 16, zusammengepresst.

Das Blechpaket 47 und aber nicht die Verteilscheiben 16, werden vorzugsweise auf die Welle 6 zur Drehmomentenübertragung geschrumpft oder kalt gepresst.

Ebenso sind andere Möglichkeiten vorhanden, das Drehmoment vom Blechpaket 47 auf die Welle 6 zu übertragen, wie Passfederverbindungen etc. Eine Paketierung des Blechpakets 47 kann auch über achsparallele Zugankerverbindungen erfolgen, die dann vorzugsweise radial innerhalb der Verteilscheiben 16 angeordnet sind.

Die Verteilscheibe 16 weist auf der dem Blechpaket 47 des Rotors 5 zugewandten Seite zumindest einen umlaufenden zum Blechpaket 47 hin offenen Verteilkanal 17 auf, der im Querschnitt betrachtet wannenförmig ausgeführt ist. Der Verteilkanal 17 schließt formschlüssig und dicht mit der Stirnseite des Blechpakets 47 ab.

Ein Überdeckungsbereich 44 des Verteilkanals 17 weist dabei mit jeder Ausnehmung 18 eines magnetischen Pol 48 zumindest abschnittsweise einen Zuführbereich auf, der einer Vergussmasse 20 gestattet über die Flusssperren 13 und/oder die Spalte 12 zwischen Permanentmagnet 9 und Blechinnenseite der Ausnehmung 18 zu gelangen.

Auf der dem Blechpaket 47 abgewandten Seite der Verteilscheibe 16 ist zumindest eine Injektionsöffnung für die Vergussmasse 20, also eine Zuführung 15 vorgesehen, um den Verteilkanal 17 und damit die Spalte 12 und/oder Flusssperren 13 der Ausnehmung 18 eines Pols 48 zu speisen.

Der Verteilkanal 17 schließt mit der Stirnseite des Blechpakets 47 formschlüssig und dicht ab, um einen dementsprechenden Druck und damit die erforderlichen Scherkräfte in der Vergussmasse 20 aufbauen zu können.

Über die Zuführung 15 wird nunmehr die vorab, insbesondere in situ, gemischte Vergussmasse 20 in das Blechpaket 47 des Rotors 5 mit vorgebbarem Druck gedrückt.

Bei dieser als thixotropisches Material ausgeführte Vergussmasse 20 stellt sich aufgrund der erhöhten Scherkräfte eine vergleichsweise geringe Viskosität ein, die der Vergussmasse 20 ermöglicht in die Spalte und Ausnehmungen des Blechpakets einzudringen, die von Permanentmagneten 9 nicht eingenommen werden. Bei dem Vergussprozess wird nunmehr die Vergussmasse 20 unter vorgebbarem Druck eingepresst und aufgrund der geringeren Viskosität verteilt sich diese in den Flusssperren 13 bzw. Spalte 12 zwischen Permanentmagneten 9 und Innenseite des Taschen 10 des Blechpakets 47 des Rotors 5.

Eine Überwachung des Drucks kann den Vorgang beenden, so dass die Vergussmasse 20 in dem Moment - wenn die Scherkräfte reduziert werden (Druckreduktion) - eine Viskositätssteigerung erfährt und somit der Vorgang des Vergießens abgebrochen wird bzw. werden kann. Sobald sich die Vergussmasse 20 in den Spalten 12 und Flusssperren 13 um den Permanentmagneten 9 verteilt hat und eine weitere Ausdehnung in die Zwischenräume der Bleche 8 ansteht, steigt der erforderliche Druck, der dann als Abbruchkriterium des Vergießens angezogen werden kann. Damit wird vermieden, dass die Vergussmasse 20 beispielsweise radial zwischen die Bleche 8 des Rotors 5 dringt und insbesondere über Stege 14 an der Oberfläche 19 des Rotors 5 austritt.

Es wird also die thixotropische Vergussmasse 20 in einem statischen oder dynamischen Mischrohr in situ gemischt, wobei die Vergussmasse 20 bei der Zuführung eine Temperatur bis 60°C, insbesondere bis 30°C aufweist, und mit einer Fließgeschwindigkeit von bis zu 10 mm pro Sekunde der Verteilscheibe 16 und/oder den Ausnehmungen 18 zugeführt wird, wobei dabei ein Druck von bis zu 10 bar, insbesondere 4,5 bis 5 bar herrscht.

Der Prozess des Vergießens der Permanentmagnete 9 in den Ausnehmungen 18 kann also nahezu bei Raumtemperatur erfolgen, was den Prozess vereinfacht und ein nahezu zeitlich nahtloses Weiterverarbeiten des Rotors 5 ermöglicht.

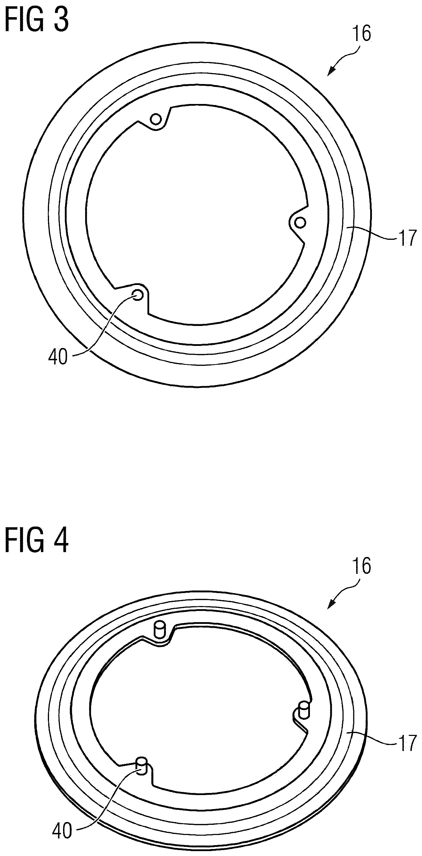

FIG 3 zeigt eine Ansicht der Verteilscheibe 16, bei der ein umlaufender Verteilkanal 17 vorgesehen ist, der dann von der Stirnseite des Blechpakets 47 aus jeweils die magnetischen Pole 48 des Rotors 5 mit einer Vergussmasse 20 versorgt.

FIG 4 zeigt eine perspektivische Darstellung der Verteilscheibe 16 bei der Zapfen 40 der Verteilscheibe 16 zu sehen sind, die später in die axialen verlaufenden Ausnehmungen 18 und/oder Aussparungen 41, 45 des Blechpakets 47 des Rotors 5 eingreifen.

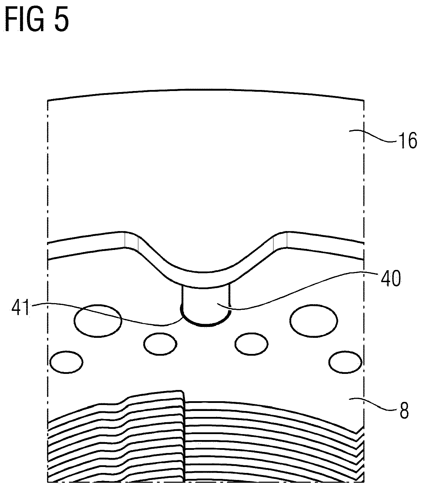

FIG 5 zeigt eine teilperspektivische Darstellung der Verteilscheibe 16 am Blechpaket des Rotors 5 beim Positionieren der Verteilscheibe 16 an der Stirnseite des Blechpakets.

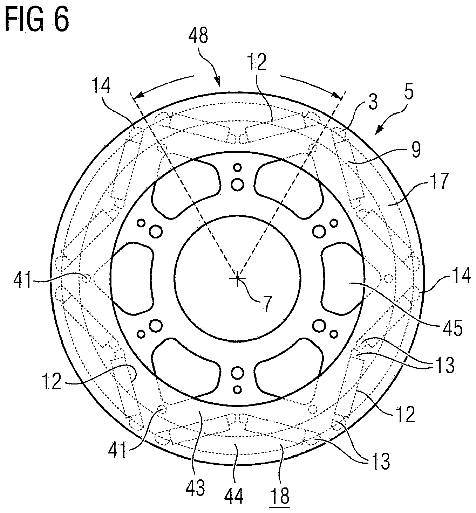

FIG 6 zeigt eine Stirnseite des Blechpakets 47 des Rotors 5 mit der Verteilscheibe 16. Der Überdeckungsbereich 43 der Verteilscheibe 16 ist radial geringer als der Überdeckungsbereich 44 des Verteilkanals 17. Der Überdeckungsbereich 44 deckt dabei zumindest Teile der Ausnehmungen 18 eines magnetischen Pols 48 ab. Die Trägheitsöffnungen 45 werden nicht mit Vergussmasse 20 gefüllt.

FIG 6 zeigt des Weiteren die magnetischen Pole 48 des Rotors 5 teilverdeckt. Die magnetischen Pole 48 werden in diesem Fall durch zwei V-förmig angeordnete Permanentmagnete 9 gebildet ist. Die Pole 48 des Rotors 5 können ebenso aus mehreren Permanentmagneten 9 gebildet sein, beispielsweise aus Doppel-V-förmigen Anordnungen, aus U-förmigen Anordnungen oder W-förmigen Anordnungen oder auch nur aus tangential angeordneten Permanentmagneten 9. Auch in axialer Richtung sind je nach axialer Länge des Blechpakets 47 Rotors 5 mehrere Permanentmagnete 9 pro Ausnehmung vorgesehen. Dies ist insbesondere bei Aufbau des Blechpakets 47 durch Teilblechpakete 42 erforderlich.

Die Permanentmagneten 9 sind in Ausnehmungen 18 angeordnet, wobei sich eine Ausnehmung 18 aus Flusssperren 13, aus gegebenenfalls optionalen Halteelementen 46 und aus Taschen 10 zusammensetzt. Die Taschen 10 sind dabei für die Aufnahme der Permanentmagnete 9 vorgesehen, die Flusssperren 13 und gegebenenfalls Halteelemente 46 dienen u.a. der Fixierung bzw. der Optimierung des magnetischen Flusses im Blechpaket 47 des Rotors 5.

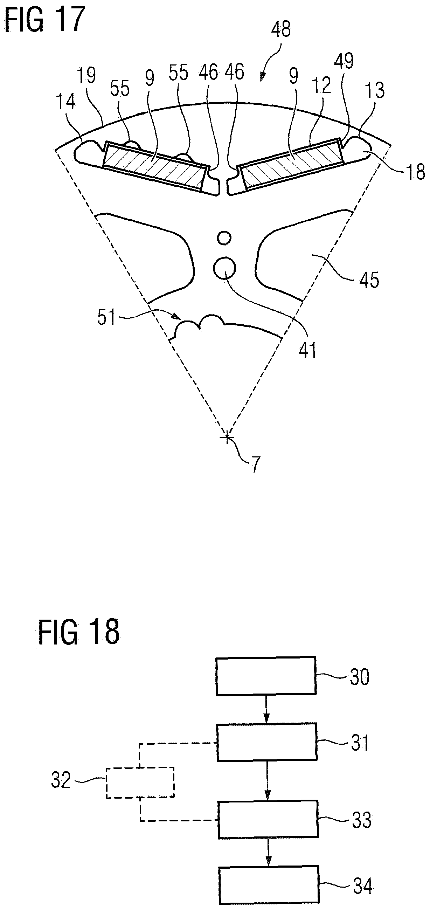

Die Spalte 12 zwischen den Blechen 8 und den Permanentmagneten 9 weisen optional zumindest abschnittsweise Auswölbungen 55 (gemäß FIG 17) auf, um den axialen Füllvorgang durch die Vergussmasse 20 zu erleichtern.

FIG 18 zeigt die prinzipiellen grundsätzlichen Schritte des Verfahrens zur Herstellung des Rotors 5, insbesondere der permanenterregten dynamoelektrischen Maschine 1, die ggf. auch erweitert werden können sind dabei:
- Schritt "30": Paketieren des Blechpakets 47 bzw. von Teilblechpaketen 42, insbesondere Stanzpaketieren mit im Wesentlichen axial verlaufenden Ausnehmungen 18 zur Aufnahme der Permanentmagnete 9, wobei die Ausnehmungen 18 Taschen 10 und Flusssperren 13 aufweisen,
- Schritt "31": axiales Einsetzen der Permanentmagnete 9 in die Taschen 10 der Ausnehmungen 18 des Blechpakets 47 oder der Teilblechpakete 42,
- optionaler Schritt "32" für Teilblechpakete 42: die mit Permanentmagneten 9 versehenen Teilblechpakete 42 werden, umfänglich versetzt zu einem Blechpaket 47 des Rotors 5 paketiert, indem die Teilblechpakete 42 nacheinander, um einen vorgebbaren Winkel umfänglich versetzt auf der Welle 6 jeweils drehfest angeordnet werden, so dass sich, axial betrachtet, ein gestaffelter Verlauf der mit Permanentmagneten 9 versehenen Taschen 10 der magnetischen Pole 48 ergibt,
- Schritt "33": Anbringen zumindest einer Verteilscheibe 16 an der Stirnseite des Blechpakets 47 mittels Verklemmung der Positionierelemente 40 in Aussparungen 41, wobei die Verteilscheibe 16 zumindest eine Zuführung 15 auf der dem Blechpaket 47 abgewandten Seite und zumindest einen Verteilkanal 17 auf der dem Blechpaket 47 zugewandten Seite aufweist,
- Schritt "34": Zuführen der in einem statischem oder dynamischen Mischrohr in situ gemischt thixotropischen Vergussmasse 20 unter einem vorgebbaren Druck, von bis zu 10bar, insbesondere 4,5 bis 5 bar, bei einer Temperatur von bis zu 60°C, insbesondere bis zu 30°C, mit einer Fließgeschwindigkeit von bis zu 10 mm pro Sekunde, über die Zuführung 15 der Verteilscheibe 16, über den Verteilkanal 17 in den Raum, den die Permanentmagnete 9 in den Ausnehmungen 18 nicht einnehmen, solange, bis zumindest sämtliche axial verlaufende Spalte 12 und Flusssperren 13 ausgefüllt sind oder bis die Ausnehmungen 18 "voll" sind und/oder ein Druckanstieg bedeutend größer als der Bearbeitungsdruck, insbesondere 10 bar festgestellt wird (Detektion des dynamischen versus statischen Drucks der Vergussmasse 20).

Die thixotropische Vergussmasse 20 wird in einem statischen oder dynamischen Mischrohr in situ gemischt.

Dabei kann der Rotor 5 in einer Hilfsvorrichtung derart positioniert werden, dass insbesondere die axialen Spalte 12 achsparallel mittels der aufsteigender Vergussmasse 20 gefüllt werden.

Während des Füllvorganges mit Vergussmasse 20 wird eine Überwachung der Füllung des Blechpakets 47 des Rotors 5 über eine Detektion des dynamischen versus statischen Drucks der Vergussmasse 20 vorgenommen.

Vor allem, wenn der Druck der Vergussmasse 20 unterschiedlich zum Umgebungsdruck ist, also darunter oder darüber liegt, ist es vorteilhaft, wenn die Verteilscheibe 16, vor allem aber der Verteilkanal 17 formschlüssig mit der Stirnseite des Rotors 5 abschließt, um eine verlustfreie Einspeisung der Vergussmasse 20 in die Ausnehmungen 18 des Rotor 5 zu gewährleisten und den Druck zwecks Abbruch des Füllvorganges zu überwachen.

Als Basisharzmaterial der Vergussmasse 20 ist ein Zwei-Komponenten-Reaktivharz vorgesehen, in dem in einer vorgebbaren Menge wärmeleitfähige und/oder eine Gelierzeit der Vergussmasse beeinflussende Additive vorhanden bzw. zusetzbar sind.

Dabei kann das Zwei-Komponenten-Reaktivharz auf Basis von Epoxy/Amin oder Polyurethan/Isocyanat ausgebildet sein.

Zusätzlich können wärmeleitende Additive wie Quarzmehl und/oder Quarzgut, und/oder BN, und/oder Alox und/oder Kreide zugesetzt werden, die in Summe oder einzeln bis zu 40 Vol.% der Vergussmasse 20 ausmachen. Damit wird eine verbesserte Wärmeanbindung der Permanentmagnete 9 an das Blechpaket 47 geschaffen.

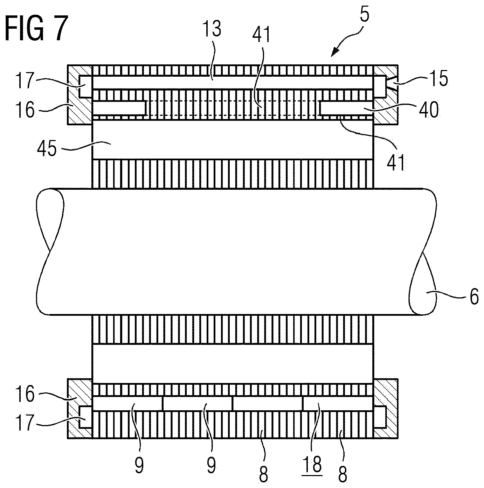

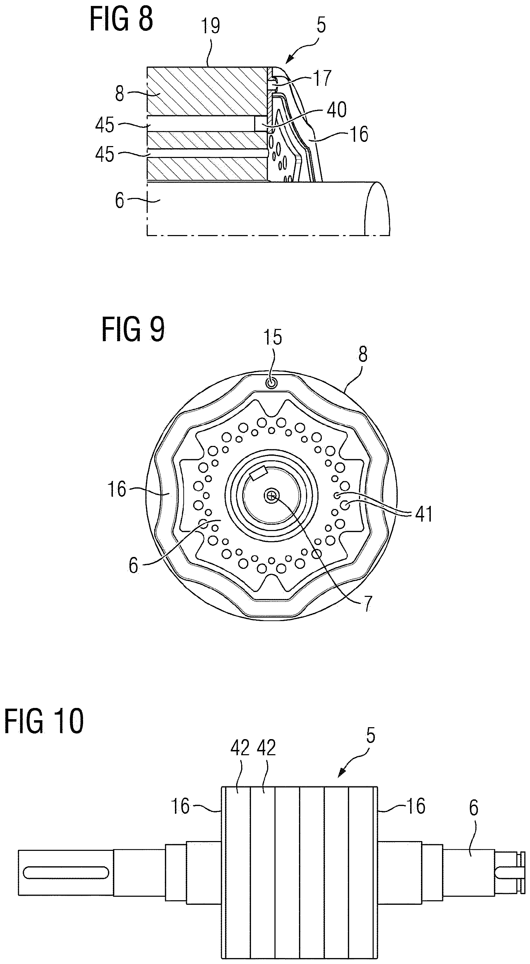

FIG 7 zeigt einen Längsschnitt des Rotors 5 nach FIG 6. Dabei ist sowohl der Überdeckungsbereich 44 als auch der axiale Eingriff der Zapfen 40 in die axial verlaufenden Aussparungen zu entnehmen. Die Verteilscheibe 16 verbleibt nach dem Vergussprozess am Blechpaket 47 - bildet also ein "verlorenes Teil". Die axial verlaufenden Bohrungen bzw. Aussparungen 41 können durchgängig ausgeführt sein oder auch nur eine - von der jeweiligen Stirnseite aus betrachtet - vorgegebene Tiefe aufweisen. Diese Bohrungen bzw. Aussparungen 41 sind - wie dies u.a. FIG 6 und FIG 9 zu entnehmen ist - in unterschiedlicher Gestaltung umfänglich auf verschiedenen Radien angeordnet.

FIG 8 zeigt eine teilperspektivische Darstellung einer Verteilscheibe 16 am Rotor 5 gemäß FIG 7.

FIG 9 zeigt eine Stirnseite des Rotors 5 mit einer Verteilscheibe 16. Die Verteilscheibe 16 ist in ihrem umfänglichen Verlauf "geschwungen" ausgeführt, um sich an der Gestaltung der magnetischen Pole 48, in diesem Fall V-förmig, auszurichten.

FIG 10 zeigt einen Rotor 5 mit zwei Verteilscheiben 16, wobei das Blechpaket 47 axial aus Teilblechpaketen 42 gebildet ist.

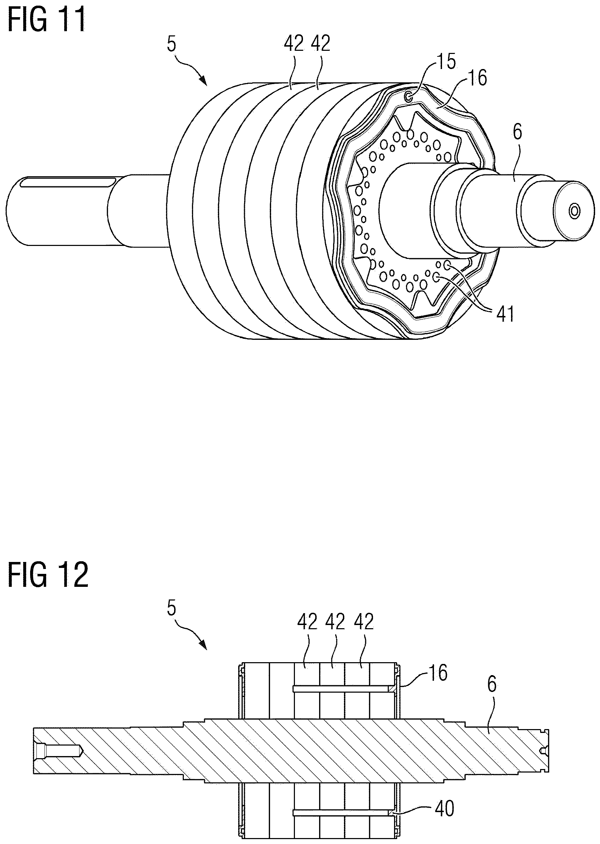

FIG 11 zeigt eine perspektivische Darstellung einer Verteilscheibe 16 an dem Rotor 5 nach FIG 10. Dabei ist u.a. die Zuführungsöffnung 15 für die Vergussmasse 20 in den Verteilkanal 17 zu sehen.

Über die Zuführung 15 wird die Vergussmasse 20 über die daran anschließenden Flusssperren 13 axial in die Ausnehmungen 18 reingedrückt, wobei sich dabei dann die Vergussmasse 20 den weiteren Weg zwischen den Permanentmagneten 9 und den Blechen 8 sucht, um auch in die radial außen liegenden Flusssperren 13 einzudringen und diese ebenfalls zu füllen. Durch Überwachung des Drucks und damit der Scherkräfte kann der Vorgang, sobald die "Ausnehmungen 18 voll sind", abgebrochen werden. Dabei wird vermieden, dass insbesondere über die schmalen Stege 14 am radial äußeren Rand des Rotors 5 die Vergussmasse 20 an die Oberfläche 19 des Blechpakets des Rotors 5 tritt.

FIG 12 zeigt einen Längsschnitt des Rotors 5, der aus umfänglich versetzt angeordneten Teilblechpaketen 42 aufgebaut ist. Wobei eine axiale Zuführung in die Ausnehmungen 18 der Teilblechpakete 42 gewährleistet ist. Der umfängliche Versatz der Teilblechpakete 42 darf die axiale Zuführung der Vergussmasse 20 in die Ausnehmungen 18 der jeweiligen Pole 48 nicht unnötig beeinträchtigen und eine axiale Füllung mittels der Verteilscheibe 16 von einer Stirnseite des Blechpakets 47 muss trotz Staffelung der Teilblechpakete 42 gewährleistet sein.

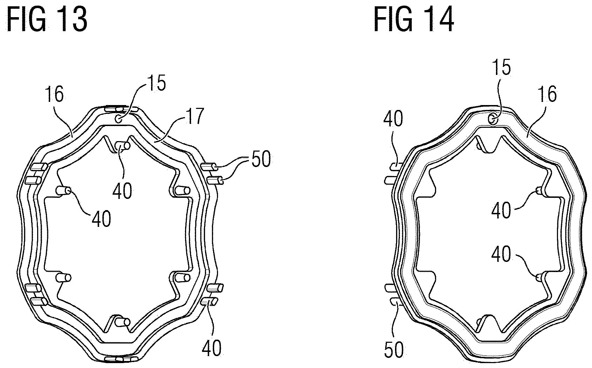

FIG 13, 14 zeigen jeweils eine teilperspektivische Darstellung einer Verteilscheibe 16 bei der nicht nur am radial inneren Bereich Zapfen 40 angeordnet sind, sondern auch im radial äußeren Bereich Fixierelemente 50.

Grundsätzlich halten die Zapfen 40 die Verteilscheibe 16 bis zum Einbringen des Klebers durch Klemmung an der Stirnseite des Blechpakets 47. Dies Zapfen 40 werden in die Bohrungen bzw. Aussparungen 41 eingepresst. Zusätzlich werden die Verteilscheiben 16 mit dem axialen Verspannwerkzeug während des Befüllens mit Kleber niedergehalten.

Die optionalen Fixierelemente 50 halten die Verteilscheibe 16 insbesondere nach dem Aushärten des Klebers. Diese Fixierelemente 50 sind nicht mit einer Presspassung in den Flusssperren 13 verankert, sondern weisen einen Klebespalt in den Flusssperren 13 auf. Damit können diese Fixierelemente 50 die Verteilscheiben 16 erst nach dem Aushärten des Klebers axial zusätzlich sicher fixieren.

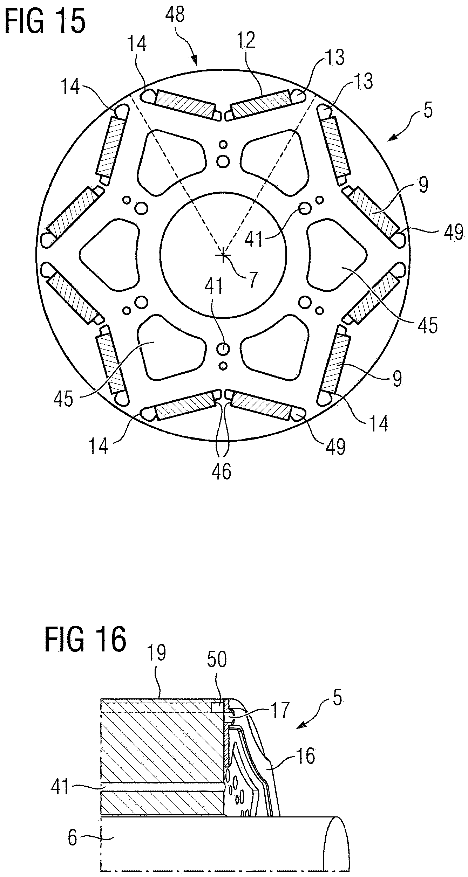

FIG 15 zeigt einen Querschnitt des mit Permanentmagneten 9 bestückten Rotors 5 in V-förmiger Anordnung der Permanentmagnete 9 eines Pols 48. Die Trägheitsausnehmungen 45 und Aussparungen 41 sind nicht mit Vergussmasse 20 versehen. Jedoch die Flusssperren 13, die Spalte 12 in den Ausnehmungen 18 sind mit Vergussmasse 20 versehen.

Eine detaillierte Darstellung eines Pols 48 zeigt FIG 17, wobei dort an der Wellenbohrung des Blechpaket die Fädelnut 51 als mögliche drehfeste Verbindung zwischen Blechpaket 47 und Welle 6 gezeigt ist. Des Weiteren sind dort auch die "übertrieben" dargestellten Spalte 12 zwischen den Permanentmagneten 9 und der Innenseite der Tasche 10 gezeigt. Außerdem sind die Haltenasen 49 und die Halteelemente 46 in der Ausnehmung 18 genauer dargestellt.

FIG 16 zeigt eine Stirnseite des Rotors 5 mit einer Verteilscheibe 16.

Eine permanenterregte Synchronmaschine mit einem erfindungsgemäßen Rotor 5, dessen Permanentmagnete 9 vergraben angeordnet sind und mit einer erfindungsgemäßen Verteilscheibe 17 und durch eine derartigen thixotropische Vergussmasse fixiert sind, ist nunmehr vergleichsweise einfach herzustellen und erreicht einen vergleichsweise hohen Wirkungsgrad. Sie ist demnach für viele Arbeitsmaschinen, vor allem Maschinen im Dauerbetrieb, besonders geeignet. Diese fungieren beispielsweise als Antriebe von Kompressoren, Verdichtern, Lüftern und als Antriebe in der Nahrungsmittelindustrie und bei maritimen Anwendungen.

Dadurch, dass die Oberfläche 19 des Rotors 5 frei von Rückständen von Vergussmassen 20 bzw. Kleber ist, kann auch der radiale Dicke des Luftspaltes 11 zwischen Stator 2 und Rotor 5 reduziert werden, was den Wirkungsgrad der permanenterregten Synchronmaschine weiter steigert.

Damit ergibt sich eine vergleichsweise höhere Leistungsdichte des Antriebs bei gleichem Volumen. Damit kann u.a. die permanenterregte Synchronmaschine vergleichsweise nahe an der Arbeitsmaschine angeordnet werden und somit auch in das Gehäuse einer der oben genannten Arbeitsmaschine als Direktantrieb integriert werden.

### Bezugszeichenliste

- 1: dynamoelektrische Maschine
- 2: Stator
- 3: Wicklungssystem
- 4: Wickelkopf
- 5: Rotor
- 6: Welle
- 7: Achse
- 8: Bleche des Rotors
- 9: Permanentmagnet
- 10: Tasche
- 11: Luftspalt
- 12: Spalt zwischen Bleche und PM
- 13: Flusssperre
- 14: Steg
- 15: Zuführung zur Verteilscheibe
- 16: Verteilscheibe
- 17: Verteilkanal
- 18: Ausnehmung
- 19: Oberfläche des Rotors
- 20: Vergussmasse
- 30: Paketieren Blechpaket
- 31: Einsetzen PM
- 32: Anbringen Verteilscheibe
- 33: Füllen mit Vergussmasse
- 40: Zapfen
- 41: Bohrung/Aussparung
- 42: Teilblechpaket
- 43: Überdeckungsbereich Verteilscheibe
- 44: Überdeckungsbereich Verteilkanal
- 45: Trägheitsaussparungen
- 46: Halteelement
- 47: Blechpaket
- 48: magnetischer Pol
- 49: Haltenasen
- 50: Fixierelement
- 51: Fädelnuten
- 55: Auswölbungen

## Patentansprüche

1. Verfahren zur Herstellung eines Rotors (5) mit vergrabenen Permanentmagneten (9), insbesondere einer permanenterregten dynamoelektrischen Maschine (1) durch folgende Schritte:
- Paketieren von Blechen (8), insbesondere Stanzpaketieren zu einem Blechpaket (47) des Rotors (5), mit im Wesentlichen axial verlaufenden, umfänglich geschlossenen Ausnehmungen (18) zur axialen Aufnahme von Permanentmagneten (9), wobei die Ausnehmungen (18) Taschen (10) und Flusssperren (13) aufweisen,
- axiales Einbringen der Permanentmagneten (9) in die Taschen (10),
- Positionieren einer Verteilscheibe (16) an einer Stirnseite des Blechpakets (47) des Rotors (5) über Positionierelemente (40) der Verteilscheibe (16), welche Positionierelemente (40) sich in den axialen Aussparungen (41) und/oder axialen Ausnehmungen (18) des Blechpakets (47) verklemmen, wobei die Verteilscheibe (16) einen der Stirnseite des Blechpakets (47) zugewandten Verteilkanal (17) und zumindest eine Zuführung (15) zum Verteilkanal (17) aufweist,
- Zuführen einer thixotropischen Vergussmasse (20) unter einem vorgebbaren Druck über die Zuführung (15) der Verteilscheibe (16), und den Verteilkanal (17) in den Raum der Ausnehmungen (18) der magnetischen Pole (48), den die Permanentmagnete (9) in den Ausnehmungen (18) nicht einnehmen, solange, bis zumindest sämtliche axial verlaufende Spalte (12) ausgefüllt sind oder bis die Ausnehmungen (18) "voll" sind.

2. Verfahren zur Herstellung eines Rotors (5) mit vergrabenen Permanentmagneten (9), insbesondere einer permanenterregten dynamoelektrischen Maschine (1) durch folgende Schritte:
- Axiales Paketieren von Blechen (8), insbesondere Stanzpaketieren zu Teilblechpaketen (42), wobei die Teilblechpakete (42) im Wesentlichen axial verlaufende Ausnehmungen (18) zur Aufnahme von Permanentmagneten (9) aufweisen, wobei die Ausnehmungen Taschen (10) und Flusssperren (13) aufweisen,
- axiales Einbringen der Permanentmagneten (9) in die Taschen (10) der Teilblechpakete (42),
- umfänglich versetztes Paketieren der Teilblechpakete (42) zu einem Blechpaket (47) des Rotors (5), die jeweils kalt auf eine Welle (6) gepresst werden, so dass sich, axial betrachtet, ein gestaffelter Verlauf der mit Permanentmagneten (9) versehenen Taschen (10) der magnetischen Pole (48) ergibt,
- Positionieren einer Verteilscheibe (16) an einer Stirnseite des Blechpakets (47) des Rotors (5) über Positionierelemente (40) der Verteilscheibe (16), welche Positionierelemente (40) sich in den axialen Ausnehmungen (18) und/oder axialen Aussparungen (41) des Blechpakets (47) verklemmen, wobei die Verteilscheibe (16) einen der Stirnseite des Blechpakets (47) zugewandten Verteilkanal (17) und zumindest eine Zuführung (15) zum Verteilkanal (17) aufweist,
- Zuführen einer thixotropischen Vergussmasse (20) unter einem vorgebbaren Druck über die Zuführung (15) der Verteilscheibe (16), und den Verteilkanal (17) in den Raum der Ausnehmungen (18) der magnetischen Pole (47), den die Permanentmagnete (9) in den Ausnehmungen (18) nicht einnehmen, solange, bis zumindest sämtliche axial verlaufende Spalte (12) ausgefüllt sind oder bis die Ausnehmungen (18) "voll" sind.

3. Verfahren zur Herstellung eines Rotors (5) nach Anspruch 1 oder 2, **dadurch gekennzeichnet, dass** die thixotropische Vergussmasse (20) in einem statischem oder dynamischen Mischrohr in situ gemischt wird, wobei die Temperatur bei der Zuführung bis 60°C, insbesondere bis 30°C stattfindet, bei einer Fließgeschwindigkeit von bis zu 10 mm pro Sekunde und bei einem Druck von bis zu 10 bar, insbesondere 5bar.

4. Verfahren zur Herstellung eines Rotors (5) nach einem der vorhergehenden Ansprüche, **dadurch gekennzeichnet, dass** die Positionierelemente (40) der Verteilscheibe (16) als Zapfen und/oder dübelähnliche Struktur ausgebildet sind.

5. Verfahren zur Herstellung eines Rotors (5) nach einem der vorhergehenden Ansprüche, **dadurch gekennzeichnet, dass** eine Überwachung der Füllung des Rotors (5) über eine Detektion eines dynamischen versus statischen Drucks der Vergussmasse (20) erfolgt.

6. Verfahren zur Herstellung eines Rotors (5), nach einem der vorhergehenden Ansprüche, **dadurch gekennzeichnet, dass** die Verteilscheibe (16), insbesondere der Verteilkanal (17) abschnittsweise formschlüssig mit der Stirnseite des Blechpakets (47) Rotors (5) abschließt, um eine verlustfreie Einspeisung der Vergussmasse (20) in die Ausnehmungen (18) des Blechpakets (47) zu gewährleisten.

7. Rotor (5) einer permanenterregten Synchronmaschine hergestellt nach einem Verfahren nach einem oder mehreren der Ansprüche 1 bis 6, **dadurch gekennzeichnet, dass** die Oberfläche (19) des Blechpakets (47) des Rotors (5) frei von einer Lackierschicht oder Vergussmasse (20) ist und die axial verlaufenden Ausnehmungen (18) mit Permanentmagneten (9) oder mit Vergussmasse (20) gefüllt sind, und zumindest eine Verteilscheibe (16) aufweist, deren Positionierelemente (40) und optionale Fixierelemente (50) sich zumindest abschnittsweise axial in Ausnehmungen (18) und/oder axialen Aussparungen (41) des Blechpakets (47) verklemmen, wobei sich die Verteilscheibe (16) nicht auf der Welle (6) abstützt.

8. Rotor (5) einer permanenterregten Synchronmaschine (1) nach Anspruch 7, d**adurch gekennzeichnet,** dass zumindest die Verteilscheibe (16) abschnittsweise als Wuchtscheibe einsetzbar ist, indem an ihrer von der Stirnseite des Blechpakets (47) des Rotors (15) abgewandten Stirnseite zusätzliche Wuchtgewichte anbringbar sind oder Material aus der Verteilscheibe (16) entnehmbar ist.

9. Rotor (5) einer permanenterregten Synchronmaschine (1) nach Anspruch 7 oder 8, **dadurch gekennzeichnet, dass** die Verteilscheibe (16) Lüfterflügel aufweist.

10. Rotor (5) einer permanenterregten Synchronmaschine (1) nach einem der Ansprüche 7 bis 9, **dadurch gekennzeichnet, dass** das Blechpaket (47) des Rotors (5) im axialen Verlauf betrachtet, gestaffelt ausgeführt ist.

11. Permanenterregte dynamoelektrische Maschine (1), insbesondere permanenterregte Synchronmaschine (1) mit einem Rotor (5) nach einem der Ansprüche 7 bis 10.

12. Verwendung einer permanenterregten Synchronmaschine (1) nach Anspruch 11, bei elektrischen Antrieben von Kompressorantrieben, Verdichterantrieben, Lüfterantrieben und als Antriebe in der Nahrungsmittelindustrie und bei maritimen Anwendungen, insbesondere als integrierter Direktantrieb.
